# EUROPÄISCHE PATENTSCHRIFT

(11) **EP 2 007 699 B1**
(45) Veröffentlichungstag und Bekanntmachung des Hinweises auf die Patenterteilung: **01.07.2015**
(21) Anmeldenummer: 07728150.9
(22) Anmeldetag: 16.04.2007
(51) Int. Cl.: C04B 41/87, C04B 41/90, C04B 35/622, C04B 35/468, C04B 35/47, C04B 35/624

(54) **KERAMISCHES DIELEKTRIKUM BZW. DÜNN- UND/ODER DICKSCHICHTEN ENTHALTEND MINDESTENS EIN KERAMISCHES DIELEKTRIKUM, HERSTELLUNGSVERFAHREN UND VERWENDUNG DAVON**
CERAMIC DIELECTRIC OR THIN AND/OR THICK LAYERS CONTAINING AT LEAST ONE CERAMIC DIELECTRIC METHOD FOR PRODUCTION AND USE THEREOF
MATÉRIAU DIÉLECTRIQUE EN CÉRAMIQUE OU COUCHES MINCES ET/OU ÉPAISSES CONTENANT AU MOINS UN MATÉRIAU DIÉLECTRIQUE EN CÉRAMIQUE, PROCÉDÉ DE PRODUCTION ET D'UTILISATION ASSOCIÉ

(30) Priorität: 18.04.2006 DE 102006017902
(43) Veröffentlichungstag der Anmeldung: 31.12.2008
(73) Patentinhaber: Karlsruher Institut für Technologie, 76131 Karlsruhe (DE)
(72) Erfinder: PAUL, Florian, 79400 Kandern Wollbach (DE); HAUSSELT, Jürgen, 76726 Germersheim (DE); BINDER, Joachim, 76227 Karlsruhe (DE); RITZHAUPT-KLEISSL, Hans-Joachim, 69190 Walldorf (DE); GIERE, Andre, 60489 Frankfurt (DE); SCHEELE, Patrick, 81735 München (DE); JAKOBY, Rolf, 61191 Rosbach (DE)
(74) Vertreter: Fitzner, Uwe
(86) Internationale Anmeldenummer: PCT/EP2007/053685
(87) Internationale Veröffentlichungsnummer: WO 2007/118872

(56) Entgegenhaltungen:
- EP-A1- 0 378 989
- US-A- 3 111 414
- DETALLE M ET AL: "Electrical property evaluation of manganese-fluorine codoping of lead zirconate titanate thin films: Compatibility between hard material and piezoelectric activity" JOURNAL OF APPLIED PHYSICS, AMERICAN INSTITUTE OF PHYSICS. NEW YORK, US, Bd. 100, Nr. 9, 2. November 2006 (2006-11-02), Seiten 94102-94102, XP012090459 ISSN: 0021-8979
- MEYAR ET AL: "Multifunctional ceramics Ba1-xSrx(Ti1-xLix)O3-3xF3x" JOURNAL OF THE EUROPEAN CERAMIC SOCIETY, ELSEVIER SCIENCE PUBLISHERS, BARKING, ESSEX, GB, Bd. 27, Nr. 2-3, 19. November 2006 (2006-11-19), Seiten 1097-1100, XP005729714 ISSN: 0955-2219
- HORNG R H ET AL: "Ion-implanted treatment of (Ba,Sr)TiO3 films for DRAM applications" JOURNAL OF NON-CRYSTALLINE SOLIDS, NORTH-HOLLAND PUBLISHING COMPANY, AMSTERDAM, NL, Bd. 280, Nr. 1-3, Februar 2001 (2001-02), Seiten 48-53, XP004229703 ISSN: 0022-3093
- ZHANG T-J ET AL: "FABRICATION AND ELECTRICAL PROPERTIES OF BA0.64SR0.36TIO3 THIN FILMS BY SOL-GEL ON PLATINUM COATED SILICON" JOURNAL OF MATERIALS SCIENCE, SPRINGER / BUSINESS MEDIA, DORDRECHT, NL, Bd. 37, Nr. 19, 1. Oktober 2002 (2002-10-01), Seiten 4155-4158, XP001130051 ISSN: 0022-2461

## Beschreibung

Diese Anmeldung nimmt die Priorität der DE 10 2006 017 902.1 in Anspruch.

Die vorliegende Erfindung betrifft das Gebiet der steuerbaren Mikrowellendielektrika und darauf basierender Bauelemente und Schaltungen auf keramischer Basis (Ferroelektrika) mit geringen dielektrischen Verlusten und hoher Steuerbarkeit (Verhältnis von Permittivitätsänderung im ausgesteuerten Zustand (mit E-Feld) zu Permittivität im nicht gesteuerten Zustand (ohne E-Feld)), d.h. mit einer hohen Güte.
Ebenso betrifft die vorliegende Erfindung keramische Dielektrika, daraus hergestellte Dünn- und/oder Dickschichten, zum Beispiel siebgedruckte Dickschichten, die Verwendung der keramischen Dielektrika und der Dünn- und/oder Dickschichten, und Verfahren zu deren Herstellung.

### Begriffsdefinitionen:

Im Rahmen der vorliegenden Erfindung sind alle Mengenangaben, sofern nicht anders angegeben, als Gewichtsangaben zu verstehen.

Sofern nichts anderes angegeben wird, werden die angeführten Reaktionen bzw. Verfahrensschritte bei Normaldruck (Atmosphärendruck) durchgeführt.

Im Rahmen der vorliegenden Erfindung wird unter einer Dünnschicht eine Schicht mit einer Dicke von kleiner als 1µm verstanden, bevorzugt zwischen 0,001 und 0,99µm, besonders bevorzugt zwischen 0,05 und 0,5µm.
Im Rahmen der vorliegenden Erfindung wird unter einer Dickschicht eine Schicht mit einer Dicke von größer oder gleich 1 µm verstanden, bevorzugt einer Schichtdicke zwischen1 bis 100µm, besonders bevorzugt zwischen 2 und 50 und insbesondere bevorzugt zwischen 2 und 20µm.

Im Rahmen der vorliegenden Erfindung wird unter einem Sol eine kolloidale Lösung, in der ein fester oder flüssiger Stoff in feinster Verteilung in einem festen, flüssigen oder gasförmigen Medium dispergiert ist, verstanden (siehe auch die einschlägige Fachliteratur, z.B. Römpp Chemie Lexikon).

Im Rahmen der vorliegenden Erfindung wird unter HF-Bereich der Hochfrequenzbereich von 100 MHz bis 100 GHz verstanden, insbesondere zwischen 100 MHz und 50 GHz bzw. zwischen 100 MHz und 40 GHz.

Unter einer homogenen Elementverteilung wird im Rahmen der vorliegenden Erfindung verstanden, daß die Elemente gleichmäßig miteinander vermischt sind, d.h., daß im wesentlichen eine statistische Verteilung der Elemente vorliegt, ohne Bereiche mit Anhäufungen eines einzelnen Elementes. Es liegt demgemäß eine Gleichverteilung der Elemente in den entsprechenden Teilchen vor, die sich in unterschiedlichen Bereichen der Teilchen nicht verändert, also keine Konzentrationsgradienten der Elemente innerhalb der jeweiligen Teilchen.

### Hintergrund der Erfindung:

In der Technik gewinnen maßgeschneiderte Keramiken zunehmend an Bedeutung. Auf spezifische Anforderungen hin optimierte Keramiken stellen in vielen technischen Bereichen Schlüsselwerkstoffe dar, ohne die viele Technologien technisch nicht machbar wären. Moderne Hochleistungskeramiken unterscheiden sich daher auch in den Eigenschaften fundamental von den allgemein bekannten, klassischen Keramiken. Wie diese bestehen sie aus nichtmetallischen, anorganischen Werkstoffen. Jedoch werden sie synthetisch unter reinen und kontrollierten Bedingungen hergestellt und erhalten erst dadurch ihre spezifischen Eigenschaften.
Allgemein lassen sich technische Keramiken in zwei große Gruppen einordnen. Zum einen sind dies die Strukturkeramiken, die grundsätzlich darauf ausgelegt sind, ihre Form und Struktur auch unter starker mechanischer, biologischer, chemischer oder thermischer Belastung beizubehalten.
Die andere Untergruppe stellen die Funktionskeramiken dar. Sie weisen spezielle Eigenschaften auf. Diese Eigenschaften sind zum Beispiel optische, elektrische, dielektrische und magnetische Funktionalitäten.

Eine besondere Stellung hat die Materialklasse der Funktionskeramiken, insbesondere die mit dielektrischen Eigenschaften, inne. Sie hat durch die vielfältigen Eigenschaften ihrer Materialien einen maßgeblichen Anteil zur Entwicklung unserer Industriegesellschaft beigetragen. Durch die rasante Verbreitung der Mikroelektronik in den letzten Jahren haben Funktionskeramiken extrem an Bedeutung gewonnen.
Elektronische Schaltungen kommen ohne die Implementierung von dielektrischen Funktionskeramiken heute nicht mehr aus. Die Leistungsfähigkeit von elektronischen Schaltungen hängt dabei in hohem Maße von der Leistungsfähigkeit der verwendeten, dielektrischen Keramiken ab.
Insbesondere Hochfrequenzanwendungen in Kommunikations- und Sensorsystemen sowie in der kabellosen Datenübertragung bedürfen qualitativ hochwertiger dielektrischer Materialien. Anwendungen können etwa Steuersysteme von Radarantennen mit elektronisch steuerbarer Strahlschwenkung sein. Diese verwenden so genannte Phasenschieber, welche die Abstrahlrichtung von phasengesteuerten Gruppenantennen (sog. "phased array"- Antennen) elektronisch steuerbar machen. Aber auch abstimmbare Hochfrequenzfilter, -modulatoren, -verstärker und -oszillatoren für Anwendungen im Mobilfunk (GSM, UMTS, Bluetooth, W-LAN etc.) sind möglich. Darüber hinaus sind vielfältige Anwendungen in der kontaktlosen Sensorik möglich (z. B. RFID (Radio Frequency Identification)-Anwendungen). In den genannten kommerziellen Anwendungen müssen die verwendeten Materialien zusätzlich kostengünstig, d. h. preislich konkurrenzfähig gegenüber Halbleiterbauteilen sein.
Die Qualitäts- und Preisanforderungen an dielektrische Hochfrequenzmaterialien sind hoch.
Zusätzlich sind die Flexibilitäts- und Mobilitätsanforderungen an die Kommunikations-Sensorsysteme im Steigen begriffen. Daraus resultiert ein Bedarf an preisgünstigen und dynamisch rekonfigurierbaren Hochfrequenz- bzw. Mikrowellenmodulen.
Die Nachfrage nach solchen steuerbaren Mikrowellenbauteilen wird in den nächsten Jahren zunehmen.
Voraussetzung dafür ist allerdings die Bereitstellung von kostengünstigen, steuerbaren Bauteilen, die wiederum direkt von der Qualität und Verfügbarkeit der dazu nötigen steuerbaren, dielektrischen Materialien abhängt.
Mögliche Materialien hierfür sind die dielektrischen Funktionskeramiken. Insbesondere ferroelektrische Oxidkeramiken sind für diese Anwendungen geeignet. Sie zeigen eine nichtlineare Abhängigkeit der Permittivität (Dielektrizitätszahl) von der elektrischen Feldstärke, was als Steuerbarkeit bezeichnet wird. Dieser Effekt läßt sich bei ihnen nahezu leistungslos mit sehr geringen Ansprechzeiten und unter gleichzeitiger Übertragung hoher Hochfrequenzleistungen hervorrufen. Darüber hinaus bieten keramische Schichten die Möglichkeit planarer Systemintegration um den Platzanforderungen der Mikroelektronik zu genügen. Im Gegensatz hierzu haben sich Phasenschieber auf der Basis von Spulen mit Ferritkernen und auf Basis von PIN-Dioden wegen nicht ausreichend schneller Ansprechzeiten und zu hohen dielektrischen Verlusten sowie fehlender planarer Integrierbarkeit nicht durchsetzen können. Die gute planare Integrierbarkeit wird möglich durch Nutzung der planaren Formgebungsverfahren für Dünn- und Dickschichten, wie etwa chemische Abscheidungsmethoden (chemical solution deposition (CSD), chemical vapour deposition (CVD)) und physikalische Gasabscheidungsmethoden (physical vapour deposition (PVD)) für die Dünnschichtherstellung sowie keramischer Siebdruck oder keramisches Foliengießen für die Dickschichtherstellung.
Unter den ferroelektrischen Oxidkeramiken wurden unter anderen bereits die Mischoxidsysteme Barium-Strontium-Titanat (Ba₁₋ₓSrₓTiO₃, BST), Barium-Strontium-Zirkonat-Titanat (Ba₁₋ₓSrₓZr_{y}Ti_{1-y}O₃, BZT) und das System Silber-Tantalat-Niobat (AgTaₓNb₁₋ₓO₃, ATN) auf ihre grundsätzliche Eignung als steuerbare Dielektrika hin getestet. Ihre dielektrischen Eigenschaften wurden an keramischen Vollkörpern, keramischen Dickschichten sowie an Dünnschichten untersucht. Die genannten Arbeiten an den Dick- und Dünnschichten beschränken sich allerdings weitgehend auf meßtechnische Fragestellungen.
Dabei stellte sich das System BST als das am erfolgversprechendste heraus.
Die kommerziell erhältlichen steuerbaren Bauteile basieren jedoch auf BST-Dünnschichten, die mittels Gasphasenabscheidung hergestellt werden und haben den Nachteil, daß ihre Herstellung sehr aufwendig ist. Zusätzlich ist die schwierige Einstellung einer definierten Stöchiometrie bei der Herstellung von Dünnschichten unvorteilhaft. Weiterhin sind die dielektrischen Eigenschaften von Dünnschichten einem starken Einfluß von inneren Verspannungen sowie von Gitterparameterunterschieden zum Substrat ausgesetzt. So können hohe Gitterspannungen aus Unterschieden der thermischen Ausdehnungskoeffizienten als auch der Gitterparameter von Schicht und Substrat zu einer erniedrigten Permittivität und Steuerbarkeit führen. Um dies kontrollierbar zu machen oder zu minimieren werden oft teure Einkristallsubstrate als Träger für Dünnschichten verwendet oder es werden zusätzliche Pufferschichten zwischen Substrat und Schicht aufgebracht, was zusätzliche Prozessierungskosten verursacht.

Demgegenüber haben Bauteile, die auf keramischen Dickschichten als funktioneller Schicht basieren, den Vorteil, daß ihre Eigenschaften nahezu allein durch die Eigenschaften der eingesetzten keramischen Pulver bestimmt werden und nicht durch das Substrat. Zudem kann man sie kostengünstig und in hohen Stückzahlen über die in der Elektronik bereits etablierte Siebdrucktechnologie herstellen. Darüber hinaus ist es möglich, preislich günstigere, polykristalline Substrate zu verwenden, da hierbei ohnehin eine polykristalline Schicht ohne kristallografische Vorzugsorientierung bzw. Epitaxie aufgebracht wird. Grundsätzlich sind mit der Siebdrucktechnik Dickschichten auf LTCC-Substraten (Low Temperature Cofired Ceramics) integrierbar, die vermehrt in der Mobilfunktechnik und Kfz-Elektronik eingesetzt werden.
BST-Dickschichten zeigen bisher im Vergleich mit BST-Dünnschichten jedoch bei Frequenzen über 5 GHz sehr stark erhöhte dielektrische Verluste, die bei höheren Frequenzen zusätzlich sehr viel stärker anwachsen als die der Dünnschichten.
Eine kleine Korngröße führt einerseits zu erniedrigten Permittivitäten und andererseits zu einem diffuser werdenden Phasenübergang der ferroelektrischparaelektrischen Phasenumwandlung am Curiepunkt. Dies hat den positiven Nebeneffekt, daß dadurch die Temperaturstabilität der Permittivität erhöht wird.
Neben den genannten Einflußfaktoren auf die dielektrischen Eigenschaften können auch Abweichungen von der stöchiometrischen Zusammensetzung und Verunreinigungen diese signifikant beeinflussen. Sie können u. U. zu einer starken Verschiebung des Curie-Punktes, zu einem Ausflachen der Permittivitätskurve oder zu einer Erniedrigung der dielektrischen Verluste führen.
Deshalb werden der Keramik oft geringe Mengen an Fremdionen, sogenannte Dotierungen zugesetzt, um gezielt die Eigenschaften zu beeinflussen. In der Literatur beschränken sich bisher die Beschreibungen von BST und BT-Dickschichten auf undotierte Dickschichten. Demzufolge ist nicht bekannt, wie sich Dotierungen auf die HF-Verluste in BST-Dickschichten auswirken.

Endo et al. in Journal of Materials Science 25 (1990) 619-623, sowie Nekrasov et al. in Inorganic Materials 1970 Vol. 6 pp. 1907 bis 1909 offenbaren die Fluoridierung von undotiertem Bariumtitanat (BT). Die Fluoridierung ist nicht temperaturstabil, was bedeutet, daß das Material nicht gesintert werden kann. Akzeptor-Fluorid-kodotiertes PZT für US-Wandler wird von Eyraud et al. in Ferroelectrics, 1996, Vol. 175 pp. 241-250 offenbart. Anwendungen als steuerbares Dielektrikum für Mikrowellenfrequenzen werden nicht erwähnt
Die Fluoridierung von BT über die Gasphase wird in US 3,111,414 offenbart, die Herstellung von fluoridiertem BT mit metallischer Kodotierung ist laut diesem Patent jedoch nicht möglich. Genausowenig ergibt sich ein Hinweis auf steuerbares Verhalten und nahezu keine Angaben zu dielektrischen Eigenschaften.
Hoh et al. in Journal of The American Ceramic Society Vol. 46, No 11, pp. 516-518 offenbaren Cr-F-kodotiertes BT und die Herstellung von dotiertem BT aus Cr₂O₃ und CrF₂ geben aber keine Aussage welche Zusammensetzung schlußendlich in der Probe vorherrscht (F kann bei Herstellung/Sintern unter feuchter Luft als HF-Gas flüchtig werden).
Die Fluoridierung von BT über die Mischoxidroute wird in der Mastersarbeit von Florian S. Paul, mit dem Titel "Fluoridation of Barium Titanate (BaTiO3) Ceramics", Manchester Materials Science Centre University of Manchester and UM-IST offenbart. Jedoch werden dort nur Niederfrequenzeigenschaften von Mn-F und Co-F-kodotiertem BT behandelt, ohne daß ein Hinweis auf Hochfrequenz-/Mikrowellleneigenschaften und steuerbares Verhalten zu entnehmen wäre.
Die Ausscheidung von BaF₂ beim Sintern von BT ohne Akzeptordotierung wird von Fujihara et al. Applied Surface Science 221 (2004) 178-183 beschrieben. Auch dort findet sich keine Angabe über steuerbare Eigenschaften

Die Dotierung mit Fluor wird auch von Makovec et al., Journal of The American Ceramic Society 86 [3] 495-500 (2003) offenbart. Beschreiben sind dort aber auch hohe Verluste bei 1 kHz und es gibt keine Angaben zu dielektrischen Eigenschaften, lediglich Widerstandsmessungen sind angegeben.

Alle HF-Untersuchungen an Dickschichten waren bisher unbefriedigend. Dickschichten zeigten bisher außerordentlich hohe Verluste im HF-Bereich. Dünnschichten waren bisher deutlich besser, aber sie sind zum einen auch deutlich teurer in der Herstellung als Dickschichten, und zum anderen zeigen auch sie relativ hohe dielektrische Verluste im HF-Bereich auf, so daß sie momentan kommerziell noch nicht genutzt werden.
Rückschlüsse vom Niederfrequenzverhalten auf das HF-Verhalten sind nicht oder nur ungenügend möglich, da insbesondere die Verluste im HF-Bereich um Größenordnungen höher sind, als im NF-Bereich.
Schließlich offenbaren US 5,427,988 und US 5,635,434 BST für ferroelektrische Komposite, jedoch ausschließlich in Kombination mit Magnesiumverbindungen. Weiterhin sind auch aus US 3,111,414, EP 0 378 989, Journal of Non-Crystalline Solids 280 (2001) 48-53 und Journal of Materials Science 37 (2002) 4155-4158 Barium- bzw. Barium-Strontium-Titanate bekannt.

### Aufgabe der vorliegenden Erfindung:

Ausgehend von den bisherigen Stand der Technik war es demgemäß Aufgabe der vorliegenden Erfindung, neue keramische Dielektrika bereitzustellen, die gegenüber denen des Standes der Technik vorteilhafte Eigenschaften aufweisen.
Weiterhin war es Aufgabe der vorliegenden Erfindung ein verläßliches Syntheseverfahren für keramische Dielektrika, insbesondere für dotierte BST-Pulver, sowie für Dünn- und/oder Dickschichten daraus bereitzustellen.
Ebenso war es Aufgabe der vorliegenden Erfindung, gut charakterisierbare, stabile und reproduzierbare Dünn- und/oder Dickschichten bereit zu stellen.
Eine weitere Aufgabe der vorliegenden Erfindung war es, Dünn- und/oder Dickschichten auf Basis des keramischen Systems BST, insbesondere siebgedruckte Dickschichten, (im undotierten, wie dotierten Zustand) für den Einsatz als elektronisch steuerbare funktionelle Schichten im Frequenzbereich von 10 kHz bis 500 GHz oder darüber, bevorzugt 100 MHz bis 100 GHz, insbesondere auch bis etwa 40 GHz bereitzustellen.

### Lösung der vorliegenden Erfindung:

Gelöst wird diese Aufgabe durch die in den Ansprüchen dargestellten Ausgestaltungen.

### Verfahrensübersicht

Im Rahmen der vorliegenden Erfindung werden zwei unterschiedliche naßchemische Syntheserouten zur Ba₁₋ₓSrₓTiO₃-Herstellung eingesetzt, die nicht über eine grobe Mischung oder Fällung, sondern über eng an Sol-Gel Verfahren angelehnte Routen verliefen. Beide Methoden gehen von Lösungen aus und können somit eine homogene Verteilung der beteiligten Elemente auf molekularer Ebene mit hoher Stöchiometrietreue garantieren, was durch die Mischoxid- und Kofällungsverfahren nicht erreicht werden kann.
Dies ist zum einen eine auf inversen Micellen basierende Route, die ausschließlich von Alkoholaten als Edukte ausgeht.
Zum anderen ist dies eine Syntheseroute, die auf einem Sol-Trocknungs-Verfahren basiert. Diese Route geht von den Ba und Sr-Acetaten, sowie dem Ti-Isopropanolat als Ausgangssubstanzen aus.
Von diesen beiden Routen ist die Syntheseroute, die auf einem Sol-Trocknungs-Verfahren basiert, erfindungsgemäß bevorzugt. Die Route über inverse Micellen ist ebenfalls von der vorliegenden Erfindung umfaßt, aber für die Herstellung der Dickschichten weniger bevorzugt.
Durch diese beiden Wege werden flexible Wege bereitgestellt, die die zuverlässige Herstellung unterschiedlich dotierter BST-Pulver erlaubt, unabhängig von der Chemie der verfügbaren Verbindungen der Dotierungselemente. Zum anderen erlauben es diese Wege, möglichst kleine BST-Partikel im Nanometerbereich zu erzeugen.

Es ist im Rahmen der vorliegenden Erfindung möglich sowohl Ausgangsprodukte mit technischem Reinheitsgrad als auch Ausgangsprodukte mit Analysenreinheit einzusetzen. In einer bevorzugten Ausführungsform der vorliegenden Erfindung werden Ausgangsprodukte mit Analysenreinheit eingesetzt, um den Einfluß von Verunreinigungen auf die Produkte zu minimieren.
Der Reinheitsgrad der Chemikalien, sowohl technischer Reinheitsgrad als auch Analysengrad, variiert dabei je nach Hersteller und Herstellungsprozeß der betreffenden Stoffe.
Im Rahmen der vorliegenden Erfindung werden demgemäß bevorzugt Chemikalien eingesetzt, deren Reinheitsgrad purum (>97%), besonders bevorzugt puriss. (>99%) und insbesondere puriss. Plus (>99,5%) beträgt, wie sie z.B. im Fluka/Riedel-de-Haen-Laborchemikalien-Katalog 2001/2002 auf Seite 6 definiert sind.
Bevorzugt ist eine möglichst hohe Reinheit.
Die erfindungsgemäß am meisten bevorzugte Reinheit entspricht einer meßtechnischen Reinheit, d.h. einer Reinheit, bei der die Verunreinigungen unterhalb der meßtechnischen Nachweisgrenze liegen.
Gegebenenfalls können die bezogenen Chemikalien noch einer Nachreinigung unterzogen werden.

Der erfindungsgemäße Herstellungsprozeß für siebgedruckte Dickschichten umfassende Mehrschichtaufbauten läßt sich demnach in sechs Schritte unterteilen:
1) Herstellung eines Sols,
2) Herstellung eines Precursors über
   a1) die inverse Micellenroute oder
   a2) die Sol-Gel-Route
   b) Trocknung des Sols,
3) Herstellung eines keramischen Pulvers mittels Kalzination des Precursors,
   3).1 gegebenenfalls Ultraschalldeagglomeration oder Mahlen des keramischen Pulvers
4) Herstellung der Siebdruckpaste durch Vermischen der Bestandteile
5) Aufbringen der Siebdruckpaste auf ein Substrat mittels Siebdruck,
6) Sintern der Dickschichten.

Im Rahmen der vorliegenden Erfindung wird dabei der Begriff Sol-Gel-Route synonym mit dem Begriff Soltrocknungsroute bzw. Soltrocknungsverfahren verwendet.

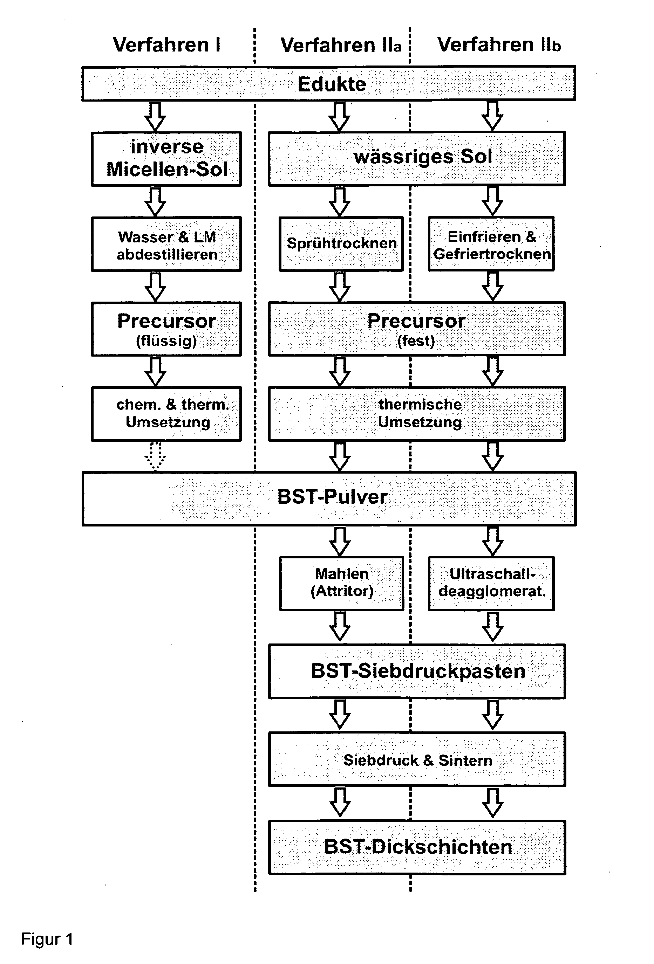

Figur 1 zeigt schematisch einen Ausschnitt des erfindungsgemäßen Herstellungsverfahrens in Bezug auf Dickschichten, wobei die inverse Micellenroute und die Soltrocknungsroute nebeneinander dargestellt sind. Die von der vorliegenden Erfindung ebenfalls umfaßten Dünnschichten sind in Figur 1 nicht dargestellt.

Alternativ zu den gerade genannten Dickschichten können ausgehend von den beschriebenen Solen auch so genannte CSD (Chemical Solution Deposition) Dünnschichten hergestellt werden, indem die Sole über
a) Dip Coating,
b) Spin Coating oder
c) Inkjet-Printing
auf einem Substrat als Dünnschicht aufgebracht werden und durch Trocknen, Kalzinieren und/oder Sintern direkt BST-Dünnschichten hergestellt werden. Demgemäß umfaßt die vorliegende Erfindung auch ein Verfahren zur Herstellung von Dünnschichten umfassenden Mehrschichtaufbauten.
Die Schichtdicke läßt sich dabei durch die Viskosität des Sols und die keramische Ausbeute des Sols bzw. über Mehrfachbeschichtungen variieren.
Dabei ist es möglich, verschiedene Schichten übereinander zu applizieren.
a) Beim Dip Coating Verfahren wird das Substrat in ein Sol eingetaucht und mit konstanter Geschwindigkeit wieder herausgezogen. Aufgrund der großen Oberflächen des Substrats wird das Lösungsmittel leicht abgegeben und der Flüssigkeitsfilm erhärtet zu einer festen Gel-Schicht. Durch thermische Behandlung erhält man die oxidische Dünnschicht.
b) Das Spin Coating Verfahren beruht auf dem Gleichgewicht zwischen der Zentrifugalkraft und der Viskosität von Sols/Lösung. Das Spin Coating Verfahren läßt sich in vier Stufen einteilen: deposition, spin-up, spin-off und evaporation. Das Verfahren eignet sich für planare Flächen und man erhält einen annähernd gleichmäßig dicken Film auf dem Substrat. Für die Schichtdicke ist in erster Linie die spin-off Phase verantwortlich.
c) Beim Inkjet-Printing kann das Sol über einen Druckerkopf strukturiert auf ein Substrat aufgebracht werden, indem gezielt BST-Sol-Tröpfchen auf das Substrat gedruckt werden.
Diese drei Verfahren sind dem Fachmann bekannt und müssen daher hier nicht detaillierter beschrieben werden.
Ebenfalls möglich, aber erfindungsgemäß weniger bevorzugt, ist es, die Dünnschichten über chemical vapour deposition (CVD)) und/oder physikalische Gasabscheidungsmethoden (physical vapour deposition (PVD) herzustellen.

Erfindungsgemäß gehen sowohl die Solsynthese über inverse Micellen (Verfahren I), als auch die Solsynthese über die Sol-Gel-Route (Verfahren IIa und IIb) von einer Lösung der Edukte aus.
Diese wird bei beiden Prozessen in ein Sol als Zwischenstufe überführt.
An die Solsynthese schließt sich die Herstellung der Pulver, der Siebdruckpasten sowie der keramischen Dickschichten bzw. die Herstellung der Dünnschichten über Sole an.
Die Ausgangsverbindungen bei der inversen Micellenroute werden dabei in einer bevorzugten Variante zuvor aus den Metallen durch Reaktion mit Isopropanol (2-Propanol) hergestellt.
Beim Soltrocknungsverfahren wird aus den Edukten eine Lösung in Essigsäure hergestellt.
Das hieraus erhaltene Sol wird anschließend über Sprühtrocknung (Verfahren IIa) oder Sprühgefriergranulation und Gefriertrocknung (Verfahren IIb) mit anschließender Kalzination in ein keramisches Pulver überführt oder z.B. als Sol einem Dünnschichtverfahren, wie z.B. naßchemische Abscheidung, CSD, zugeführt.
Das resultierende keramische Pulver wird dann weiter zur Herstellung von Siebdruckpasten, bevorzugt zur Herstellung von Siebdruckpasten auf hydrophober, organischer Lösungsmittelbasis (Terpineol), verwendet.
Die gewonnenen keramischen Pulver werden bevorzugt zu Siebdruckpasten mit einem Feststoffgehalt von etwa 17 Vol.-% weiterverarbeitet.

Daraus wiederum werden dann Dickschichten per Siebdruck auf ein Substrat aufgebracht. Bevorzugt geschieht dies per halbautomatischem Siebdruck. Mögliche Substrate sind im Prinzip alle Substrate, die eine Temperatur von 800°C oder mehr aushalten. Bevorzugt werden Aluminiumoxidschichten, insbesondere bevorzugt sind polykristalline Al₂O₃-Substrate.

Die feinskaligen keramischen Ausgangspulver werden erfindungsgemäß bevorzugt über die Soltrocknungsroute durch Gefriertrocknung hergestellt. Diese Route ist äußerst flexibel in Bezug auf die herstellbaren Stöchiometrien der Pulver. Die resultierenden Pulver liegen ab 700°C kristallin vor und sind hart agglomeriert, mit einer mittleren Primärpartikelgröße von ca. 40 nm. Sie lassen sich mittels Ultraschall auf Agglomeratgrößen im nm-Bereich herunterbrechen.

Die erfindungsgemäß hergestellten Dickschichten zeigen bevorzugt Porositäten im Bereich von etwa 20 bis 40%.
Ferner sind die erfindungsgemäß hergestellten Dickschichten bevorzugt feinteilig. Feinteilig bedeutet dabei, daß die Korngrößen im Bereich von 20 bis 1000, bevorzugt 100 bis 800 und besonders bevorzugt 270 bis 520 nm liegen.

Erfindungsgemäß kann Herstellung der Dickschichten auf verschiedene Art und Weise variiert werden, wobei es erfindungsgemäße bevorzugt ist, durch eine erhöhte Kalzinationstemperatur oder durch Mikrowellensintern zu variieren.

In einer erfindungsgemäß bevorzugten Variante, weisen die Dünn- und/oder Dickschichten eine möglichst geringe Restfeuchte auf, d.h. der Restgehalt an Wasser liegt unter 10 Gew.-%, besser unter 5 Gew.-%, noch besser unter 3 Gew.-%, jeweils bezogen auf die Gesamtmasse der Dickschichten, besonders bevorzugt sind sie vollständig wasserfrei, d.h. die Restmenge an Wasser liegt unter der meßtechnischen Nachweisgrenze.

Um zu vermeiden, daß die Dünn- und/oder Dickschichten Wasser ab- oder adsorbieren, können sie im einer bevorzugten Ausgestaltungsform unter Schutzatmosphäre, insbesondere trockener Stickstoffatmosphäre, hergestellt und dann noch gegebenenfalls mit einem geeigneten, im Stand der Technik gebräuchlichen Harz versiegelt werden.

Die beschriebenen Verfahren werden höchst bevorzugt in Zusammenhang mit den erfindungsgemäßen keramischen Dielektrika auf Basis des Systems
Ba₁₋ₓSrₓTi_{1-y}Mey_{O3-z}F_{z} mit
x = 0,0001 bis 1, bevorzugt 0,2 bis 0,6 und
y = 0,0001 bis 0,2, bevorzugt 0,001 bis 0,05 und
z = 0,00001 bis 3, bevorzugt 0,001 bis 0,2.
durchgeführt.

In einer bevorzugten Ausgestaltungsform sind die Dielektrika der vorliegenden Erfindung akzeptordotiert.
Die so erhaltenen erfindungsgemäßen Dielektrika weisen eine deutliche und selektiv erhöhte Permittivität und im NF-Bereich auch eine deutliche und selektiv erhöhte Steuerbarkeit auf.

Eine erfindungsgemäß bevorzugte Dotierung ist die Fe-Akzeptor-Fluorid-Kodotierung von BST, welche die dielektrischen Verluste erniedrigt und die Güten signifikant erhöht, vor allem im niedrigen GHz-Bereich, d.h. im Bereich um 0,1 bis 50 GHz, insbesondere unter 20 GHz, also von 0,1 bis 20 GHz.
Eine Eisen oder andere Akzeptordotierung erniedrigt vor allem im HF-Bereich die dielektrischen Verluste und die Abhängigkeit der Verluste vom Steuerfeld drastisch.
Eine Fluoridierung erhöht die Permittivität und auch die Steuerbarkeit, unter gleichzeitiger weiterer Erniedrigung der Verluste.
Durch die stark erniedrigten Verluste und erhöhte Steuerbarkeit steigen die Güten, bevorzugt im Frequenzbereich von 5 bis 0,1 GHz stark an.

Fluor weist einen Ionenradius (F⁻, Koordinationszahl 6) auf, der dem des Sauerstoff (O²⁻, Koordinationszahl 6) sehr ähnlich ist. Daher eignet sich Fluor besonders zur Besetzung von Sauerstoffstellen im Dielektrikum (BST).

Weitere mögliche Akzeptordotierungen sind Co, Mn, Ni, Cu, Mg, Cr, Zn, Cd, Ag, Pt, Au, Y, Sc, Al, Ga, In, As, Sb, bevorzugt sind dabei Co, Mn, Ni, Cu, Mg, Cr.

Das Titan-Ion kann aber nicht nur durch die aufgeführten Dotierungselemente substituiert werden, sondern auch durch das isovalente Element Zirkonium.
Bei dem System (Ba,Sr)TiO₃-(Ba,Sr)ZrO₃ handelt es sich um ein Mischphasensystem, das durch die isovalente Besetzung der Gitterplätze strukturell modifiziert wird. Im Gegensatz zu den dotierten Materialien, die auf eine Heterovalenz abzielen, benötigt man für einen merklichen Einfluß wesentlich größere Mengen an substituierten Atomen (>5-10 Atom-%).
Somit ist in dem (Ba,Sr)T_{1-y}Me_{y}O_{3-d}F_{z} Substitution der Ti-Ionen durch Zr-Ionen in gewissen Grenzen möglich, ohne die positiven Eigenschaften des gesamten dotierten Systems wesentlich zu beeinflussen.

Demgemäß sind in einer Variante der vorliegenden Erfindung die Titan-Ionen durch maximal 25 Atom-%, bevorzugt 10%, besonders bevorzugt 5% Zr ersetzt. Bevorzugte Mengen sind dabei 0,001 bis 25, besonders bevorzugt 0,001 bis 12 und insbesondere 0,001 bis 7 Atom-% Zr. Am meisten bevorzugt ist es 0,001 bis 2,5 Atom-% einzusetzen. Die Angaben in Atom-% beziehen sich dabei auf das durch Zr substituierte Element Ti.

Als Ausgangspunkt für die Solsynthese über den inversen Micellenprozeß dienen die entsprechenden Alkoholate von Barium bzw. Strontium.
Die Ba- und Sr-Alkoholate können, sofern sie nicht käuflich erworben werden aus den Metallen durch Reaktion mit getrocknetem und destilliertem Alkohol, bevorzugt Isopropanol, hergestellt werden. Geeignete weitere Alkohole für die Herstellung sind z.B. - aber nicht ausschließlich - Ethanol, n-Propanol, 1-Butanol, 2-Butanol, Isobutanol, t-Butanol.
Als Ti-Quelle wird bevorzugt Ti-Isopropanolat eingesetzt. Weitere mögliche Titan-Quellen sind z.B. Ti-Alkoholate von 2-Butanol, Isobutanol, t-Butanol.
Als Lösungsmittel für die Alkoholate verwendbar sind übliche, im Stand der Technik bekannte Alkoholat-Lösungsmittel, bevorzugt wird getrockneter Diphenylether verwendet.

Bei der Soltrocknungsroute geht man von den Ba- und Sr-Acetaten sowie dem Ti-Isopropanolat als Edukten aus. Weitere einsetzbare Ausgangsverbindungen sind z.B. Titan(IV)-bis-(ammoniumlactato)-dihydroxid oder Barium- oder Strontiumpropionat.
Als Lösungsmittel verwendbar sind Essigsäure und Ethylenglykol, wobei das Ethylenglykol auch als Zusatz zur Essigsäure verwendet werden kann, bevorzugtes Lösungsmittel ist Essigsäure (min. 99,8%).
Weiterhin wird vollentsalztes Wasser verwendet, das in einer bevorzugten Ausführungsform über einen Millipore Reinstwasser-Ionenaustauscher zusätzlich gereinigt wird.

Als Dotierungsverbindungen, der gewünschten Dotierungselemente Fe und F-werden bevorzugt FeNO₃·9H₂O, sowie Trifluoressigsäure (TFA) verwendet. Geeignet hierfür sind weiterhin Eisen(III)-acetylacetonat, Fluorethanol, Fluoressigsäureethylester.

Bei der inversen Micellenroute wird zu den Alkoholaten, die in einem geeigneten Lösungsmittel gelöst vorliegen, zunächst eine Fettsäure (wie z.B. definiert in Römpp Lexikon Chemie) zugegeben. Geeignet sind dabei im Prinzip alle gesättigten oder ungesättigten Fettsäuren mit 8 bis 24 Kohlenstoffatomen, bevorzugt werden Fettsäuren mit 12 bis 22, bevorzugt 16 bis 20 Kohlenstoffatomen. Aus dem dann resultierenden Sol wird überschüssiger Alkohol abdestiliert und danach mit Wasserstoffperoxid umgesetzt. Das daraus resultierende Sol wird dann noch unter Rückfluß gerührt, bevorzugt für 24 bis 72 Stunden, besonders bevorzugt für 40 bis 60 Stunden.

Im Gegensatz zur inversen Micellenroute wird bei der BST-Synthese mittels Sol-Gel-Ansatz nicht von den reinen, hydrolyseempfindlichen Alkoholaten, sondern von einem stöchiometrischen Gemisch aus den Ba- und Sr-Acetaten sowie vom Ti-Isopropanolat ausgegangen. Aus dem resultierenden, wäßrigen Sol kann sowohl ein undotiertes, als auch ein variabel dotierbares präkeramisches Precursorpulver gewonnen werden.

Nach erfolgter Synthese und Verdünnung können die Sole sofort verarbeitet werden.
Sie werden dann entweder mittels Sprühtrocknung direkt in ein Precursorpulver oder mittels Sprühgefriergranulation in ein gefrorenes Granulat überführt, welches anschließend durch Gefriertrocknung in ein Precursorpulver umgewandelt werden kann. Alternativ werden die Sole einem Dünnschichtverfahren zugeführt.
Die Sprühtrocknung bzw. die Gefriertrocknung erfolgen dabei durch übliche, bekannte Verfahren.

Zur Herstellung von keramischen BST-Dickschichten wird im Rahmen der vorliegenden Erfindung bevorzugt die Siebdrucktechnologie eingesetzt.
Die hierzu nötigen Pasten werden aus zuvor über den inversen Micellenprozeß oder bevorzugt den Soltrocknungsprozeß synthetisierten BST-Pulvern hergestellt.
Dazu werden die Pulver zumindest mit
- einem Lösungsmittel als verdampfbarem Vehikel,
- einem Detergenz als Dispergierungshilfe und
- einem Rheologieadditiv zur Einstellung des gewünschten Fließverhaltens der Paste
vermischt.
Einige Reagenzien, die dazu bevorzugt verwendet werden, sind folgende:

| Substanz | Hersteller |
|---|---|
| Terpineol | Fluka Chemie AG, Buchs CH |
| Hypermer KD1 | Uniquema, ICI |
| Ethylcellulose "Ethocel", 5-15 mPas (80:20 Toluol-Ethanol Lösung) | Fluka Chemie AG, Buchs CH |
| Aceton (SupraSolv für die Gaschromatografie) | Merck kGA, Darmstadt |

Bevorzugte Siebdruckpasten im Rahmen der vorliegenden Erfindung enthalten demgemäß 50 bis 90, bevorzugt 70 bis 80 Vol.-% Lösungsmittel, 0,3 bis 2,5. bevorzugt 0,6 bis 1,1 Vol.-% Detergenzien, 2,5 bis 6, bevorzugt 4 bis 5 Vol.-% Rheologieadditive, 12 bis 22, bevorzugt 15 bis 20, besonders bevorzugt 17 bis 18 Vol.-% BST-Pulver, und 0 bis 10, bevorzugt 0 bis 5 Vol.-% sonstige Additive, wobei die Prozentzahlen so gewählt werden, daß sie sich zu 100 Vol.-%, bezogen auf die vollständige Siebdruckpaste, addieren.

Das Erstellen der Dickschichten mittels Siebdruck im Rahmen der vorliegenden Erfindung erfolgt nach im Stand der Technik üblichen Vorgehensweisen.
Es können beliebige Siebdruckmaschinen eingesetzt werden, bevorzugt wird im Rahmen der vorliegenden Erfindung eine halbautomatische Siebdruckmaschine eingesetzt, z.B. EKRA, Typ M2.
Beispiele für im Rahmen der vorliegenden Erfindung anwendbare Druckparameter sind:

| Druckparameter | Wert |
|---|---|
| Absprung | abhängig von Gerät und Substrat, z.B. 0,1 bis 1 mm |
| Rakelgeschwindigkeit | 10 bis 50 mm/s, bevorzugt 25 bis 35 mm/s |
| Rakeldruck | 0,3 bis 5 bar, bevorzugt 1,5 bis 2,5 bar |
| Rakelbreite ca. | abhängig von Gerät und Substrat, z.B. 5 bis 15 cm |
| Rakelhärte | abhängig von Gerät und Substrat, z.B. 40 - 80 Shore |

Zum Drucken können z.B. Siebe mit Edelstahlgewebe und einem Bespannungswinkel von 15 bis 30° verwendet werden. Mögliche verwendbare Gewebefeinheiten liegen z.B. im Bereich von 100 bis 500 mesh/inch mit einem Drahtdurchmesser von 10 bis 60µm und einer Maschenweite von 30 bis 100µm.
Die Strukturierung der Siebe kann z.B. durch einen UV-aushärtbaren Fotopolymerfilm (insbesondere Murakami MS) mit entsprechender Dicke, bevorzugt zwischen 10 und 50 µm, der durch eine Photopolymeremulsion auf die Siebe laminiert wird, erfolgen. Mittels Belichtung von Diapositiven in einem Siebdruckkopiergerät (insbesondere Koenen Variocorp S) und wäßriger Auswaschung der nichtbelichteten Bereiche können somit die gewünschten Strukturen erzeugt werden.

In einer bevorzugten Variante des erfindungsgemäßen Verfahrens wird eine thermisch hohe Vorbehandlung der Pulver und/oder ein Sintern der Schichten, insbesondere mittels Mikrowellen, vorgenommen.
Das Sintern der resultierenden Dickschichten kann im Rahmen der vorliegenden Erfindung nach gut bekannten Methoden erfolgen, von denen eine bevorzugte das Sintern mittels Mikrowellen ist.

Zum Sintern sind im Rahmen der vorliegenden Erfindung die verschiedensten gebräuchlichen geschlossenen Öfen, wie z.B. Kammeröfen oder Röhrenöfen, wie z.B. Heraeus CTF1600, geeignet.
Geeignete Sintertemperaturen sind 800 bis 1600°C, bevorzugt 900 bis 1400, besonders bevorzugt 1100 bis 1300°C und die Dauer 10 Minuten bis 5 Stunden, bevorzugt 30 Minuten bis 2 Stunden, besonders bevorzugt 45 Minuten bis 1 Stunde und 15 Minuten.
Geeignete Heiz- und Abkühlrate sind dabei 1 bis 20, bevorzugt 3 bis 10, besonders bevorzugt 4 bis 8 K/Min.
Je nachdem wie Substrat oder Siebdruckpaste aufgebaut bzw. zusammengesetzt sind, ist es erforderlich, den Ofen während des Sinterns mit einer Schutzatmosphäre zu spülen. Bevorzugte Schutzatmosphären hierfür sind getrocknete Luft, getrockneter Stickstoff oder getrocknete Edelgase, insbesondere Helium oder Argon. Dadurch können unerwünschte Nebenreaktionen, wie z.B. F⁻-Verluste durch Bildung von HF mit atmosphärischem Wasser, vermieden werden.
Die Durchgangsmenge des Spülgases ist dabei von Ofengröße und weiteren Verfahrensparametern abhängig, liegt aber typischerweise im Rahmen von 0,001 bis 10, bevorzugt 0,01 bis 5, besonders bevorzugt 0,05 bis 1 und insbesondere bevorzugt 0,05 bis 0,2 l/min.
Es ist im Rahmen der vorliegenden Erfindung aber auch möglich, gerade durch das Überleiten von genau ausgewählten Gasen durch den Ofen, gezielt (Neben-)Reaktionen, wie z.B. ein Anätzen des Substrats bzw. der dielektrischen Dickschicht mittels Chlorwasserstoff o.ä., auszulösen. Gegebenenfalls kann dazu auch die Dickschicht teilweise durch schützende Beschichtungen abgedeckt sein.

Zusätzlich oder alternativ zu dem Sinterverfahren im Kammer- bzw. Röhrenofen können die Dickschichten im Rahmen der vorliegenden Erfindung auch mittels Mikrowellen gesintert werden.
Typischerweise werden dazu Öfen mit eingebauter Mikrowellenquelle eingesetzt, die bei 10 bis 40 GHz arbeiten.
Die eingestrahlte Mikrowellenleistung liegt dabei bevorzugt zwischen 1 und 15, bevorzugt 1 und 12, besonders bevorzugt 1 bis 10 und insbesondere 5 bis 10 kW.

Die Aufheizrate beträgt 30 K/Min, die Sintertemperatur 1200°C, die Haltezeit 20 Minuten und die Abkühlrate entspricht 5 K/Min. bis 500°C und der natürlichen Abkühlrate des Probenisolationssystems ab 500°C. Die Abkühlrate beträgt unter 500°C maximal 20 K/Min. Die Atmosphäre ist Umgebungsluft, bevorzugt trockene Umgebungsluft.

Das Trocknen, Kalzinieren und/oder Sintern der erfindungsgemäßen Dünnschichten erfolgt sinngemäß auf gleiche Art und Weise.

Die in den erfindungsgemäßen Verfahren in Schritt 5) eingesetzten, zu beschichtenden Substrate können in einer bevorzugten Ausführungsform mit einer Metallschicht, bevorzugt aus Aluminium, Nickel, Palladium, Kupfer, Gold, Silber und/oder Platin, insbesondere Platin, überzogen sein.

Die erfindungsgemäßen Dünn- und/oder Dickschichten, bzw. die mit den erfindungsgemäßen Verfahren hergestellten Dünn- und/oder Dickschichten können in einem weiteren Schritt 7) noch mit einer oder mehreren Metallschichten metallisiert werden.
Für diese Metallisierung sind z.B. Chrom und/oder Gold geeignet. Bevorzugt wird dabei Gold, welches insbesondere in der Form von Siebdruckpasten eingesetzt werden kann.
Das Metallisieren kann im Rahmen der vorliegenden Erfindung bevorzugt durch
a) Siebdruck,
b) Aufdampfen,
c) Sputtern,
d) Ionenätzen oder
e) Tintenstrahldruck (Ink-Jet Printing)
erfolgen.
Gegebenenfalls kann das Metallisieren noch durch weitere aus dem Stand der Technik bekannte Drucktechniken erfolgen.

Ferner kann das erfindungsgemäße Verfahren in einer Variante noch die weiteren Schritte
8) Sintern der Metallschicht(en),
9) Aufbringen eines handelsüblichen Photolacks, z.B. über Rakeln oder Spin Coating,
10) Belichtung über eine Fotomaske und Behandlung in einem handelsüblichen Entwicklerbad,
11) Galvanische Metallabscheidung, insbesondere mit Silber, Gold oder Platin,
12) Lösen des Photolacks und wäßriges Abätzen der Startmetallisierung
umfassen, welche eine Strukturierung des beschichteten Substrates bewirken, z. B. zur Herstellung von Leiterplatinen.

Ein bevorzugter Aufbau, der aus dem erfindungsgemäße Verfahren resultiert, ist demgemäß
i) Substrat
ii) Metallschicht (optional)
iii) BST-Dickschicht oder BST-Dünnschicht
iv) Metallschicht, die gegebenenfalls strukturiert sein kann.

Die Dünn- und/oder Dickschichten der vorliegenden Erfindung weisen folgende Eigenschaften auf:
Wesentlicher Vorteil der erfindungsgemäßen BST und des erfindungsgemäßen Verfahrens ist, daß das Fluor tatsächlich Bestandteil des BST ist und nicht lediglich an der Oberfläche adsorbiert ist, wie dies im Stand der Technik der Fall war.

Ferner ist es von Vorteil, daß sich im Rahmen der vorliegenden Erfindung durch die Variation des Strontium-Gehaltes die Curietemperatur der keramischen Dielektrika gezielt einstellen läßt. Dies war aus dem bisherigen Stand der Technik weder zu entnehmen, noch zu erwarten.

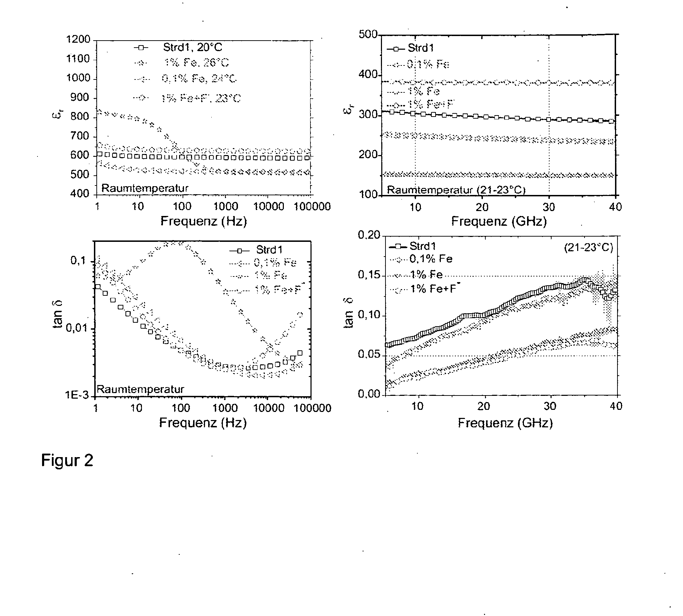

Ein besonderer Vorteil der Eisen-Fluorid-kodotierten Dielektrika gemäß der vorliegenden Erfindung liegt darin, daß durch die kombinierte Dotierung unter 5GHz der K-Faktor (d.h. die Güte) sehr deutlich, zum Teil bis um das 100-Fache verbessert werden.
Ein weiterer Vorteil der Eisen-Fluorid-kodotierten Dielektrika liegt in den geringeren Verlusten (tan delta) im gesamten GHz-Bereich, sowie in niedrigeren Verlusten bei hohen Permittivitäten (Epsilonᵣ) (siehe Figur 2).
In Figur 2 bedeuten dabei:
Epsilonᵣ = Permittivität
Tan delta = dielektrischer Verlust
Die Kurven "Strd1" beziehen sich auf undotiertes BST, hergestellt aus Edukten mit Standard-Reinheit, die übrigen Kurven beziehen sich auf BST die mit entsprechenden Mengen Eisen und/oder Fluor dotiert sind.

Mit dem erfindungsgemäßen Verfahren lassen sich gut reproduzierbar die verschiedensten dotierten und undotierten Keramiken, bevorzugt werden jedoch die erfindungsgemäßen keramischen Dielektrika, zu Dünn- und/oder Dickschichten verarbeiten.
Die mit dem erfindungsgemäßen Verfahren hergestellten Dünn- und/oder Dickschichten und Mehrschichtsubstrate weisen darüber hinaus gute technische Eigenschaften, wie z.B. Beständigkeit und Haltbarkeit auf.

Das erfindungsgemäße Verfahren führt zu einer bedeutenden Erhöhung der Leistungsfähigkeit von BST-Dünn- und/oder Dickschichten.

Der für die erfindungsgemäßen Dielektrika bzw. die daraus resultierenden Dünn- und/oder Dickschichten anwendbare Frequenzbereich liegt im Bereich 10 kHz bis 500 GHz oder darüber, bevorzugt 100 MHz bis 100 GHz, insbesondere zwischen 100 MHz und 50 GHz bzw. zwischen 100 MHz und 40 GHz

Die erfindungsgemäßen dielektrischen Dünn- und/oder Dickschichten können als bzw. in koplanaren Wellenleiterstrukturen (CPW), IDC-Strukturen (Interdigitale Kapazitäten) oder MIM-Strukturen (Metal Insulator Metal) verwendet werden.

Weiterhin besteht ein hohes Anwendungspotential für die undotierten oder fluoridierten, neuartigen Dünn- und/oder Dickschichten in der drahtlosen Kommunikation (Mobil-/ Sattelitenfunk, RFID, Punkt-zu-Punkt- und Punkt-zu-Multipunktsysteme) im Frequenzbereich von 10 kHz bis 500 GHz oder darüber, bevorzugt 100 MHz bis 100 GHz, insbesondere auch bei Frequenzen unter 10 GHz.

In der Telekommunikationsbranche sind steuerbare dielektrische Materialen, wie die gemäß der vorliegenden Erfindung, von äußerst hohem Interesse. Die potentiellen Stückzahlen an Bauteilen, die derartige Schichten enthalten gehen in die Millionen auf einem wettweiten Markt.

Die keramischen Dielektrika der vorliegenden Erfindung bzw. die diese enthaltenden Dünn- und/oder Dickschichten gemäß der vorliegenden Erfindung können als bzw. in Halbleitern, Kondensatoren, insbesondere steuerbaren Kondensatoren, Ersatz für Schwingquarze Verwendung finden.
Die keramischen Dielektrika der vorliegenden Erfindung bzw. die diese enthaltenden Dünn- und/oder Dickschichten gemäß der vorliegenden Erfindung finden Verwendung in der Telekommunikationsbranche, im Bereich der Hochfrequenztechnik und/oder im Bereich der Telekommunikation
Ferner finden die keramischen Dielektrika der vorliegenden Erfindung bzw. die diese enthaltenden Dünn- und/oder Dickschichten gemäß der vorliegenden Erfindung Verwendung im Mobilfunk, Satellitenfunk, Punkt-zu-Multipunkt Funksystemen, abstimmbaren RF-Filter und Duplexer, adaptive Anpaßnetzwerke oder Phasenschieber, RF-Sensorsysteme: RFID
Schließlich können die keramischen Dielektrika der vorliegenden Erfindung bzw. die diese enthaltenden Dünn- und/oder Dickschichten gemäß der vorliegenden Erfindung in kompakten elektronisch steuerbaren und/oder nichtsteuerbaren HF/Mikrowellenmodulen, bevorzugt in Bluetooth-, Mobilfunk- und RFID-Anwendungen, in elektronisch steuerbaren HF-Leitungen und elektronisch abstimmbaren Hochfrequenzfiltern verwendet werden, sowie in Antennen.

Die verschiedenen Ausgestaltungen der vorliegenden Erfindung, zum Beispiel, aber nicht ausschließlich, diejenigen der verschiedenen Ansprüche, können in beliebiger Art und Weise miteinander kombiniert werden, sofern dies technisch sinnvoll ist.

Die Erfindung wird nun unter Bezugnahme auf die folgenden nicht-limitierenden Beispiele erläutert.

### Beispiele:

### Beispiel A

Die Synthese eines Sols, das der Menge von 20 g BST entsprach, mittels inverser Micellenroute erfolgte folgendermaßen:
Zu einer Lösung von 26,64 g Ti-Isopropylat (99,75 mmol) in 500 ml (536,70 g, 2,95 mol) getrocknetem Diphenylether in einem stickstoffgespülten, temperierbaren Glasreaktor wurden 7,725 g (56,25 mmol) Bariummetall sowie 3,286 g (37,50 mmol) Strontiummetall in etwa erbsengroßen Stücken gegeben. Die anfangs molkefarbene, kolloidale Lösung wurde auf 70°C temperiert und es wurden während 7 Tagen 6 x die stöchiometrische Menge (67,61 g, 1,125 mol) an getrocknetem Isopropylalkohol zugegeben. Nach 7 Tagen hatten sich die Metalle gelöst. Zu der nun honigfarbenen, kolloidalen Lösung wurde in etwa die dreifache mol-Menge der Alkoholate (3 x 93,75 mmol) an Ölsäure (cis-9-Octadecensäure, 79,36 g) zugetropft. Anschließend wurde bei 100°C und Normaldruck das überschüssige Isopropanol abdestilliert. Daraufhin wurden dem braunen Sol im Überschuß 95,74 g (2,82 mol) 30%iges H₂O₂ ("Perhydrol") langsam während 50 Minuten zugetropft. Nach Abschluß der heftigen Reaktion wurde die gebildete weiß-gelbe ("Pastis"farbene) Emulsion über 50 Stunden unter Rückfluß bei ca. 90-100°C gerührt. Es resultierte ein dunkelbraunes Sol. Dieses wurde direkt nach der Herstellung am Rotationsverdampfer bei 80°C und 145°C unter Wasserstrahlvakuum (5 hPa) eingeengt. Dabei wurde zuerst zurückgebliebenes Wasser und dann das Lösungsmittel Diphenylether weitgehend abdestilliert. Es resultierte ein tiefbraunes, hochviskoses Precursor-Sol.

### Beispiel B

Die Herstellung eines Sols über die Sol-Gel Route entsprechend der Masse von 20 g BST-Pulver wurde wie folgt durchgeführt:
In den mit N₂ gespülten Glasreaktor wurden bei Raumtemperatur zu einer Lösung von 14,368 g Barium-Acetat (56,25 mmol) und 8,052 g Strontium-Acetat (37,50 mmol) in 240,2 g Eisessig (4 mol) 26,648 g Titan(IV)isopropanolat (93,75 mmol) zugetropft. Es folgte eine exotherme Reaktion und ein leicht viskoses, farbloses und klares Sol entstand. Anschließend wurden 432,4 g Wasser (Millipore gefiltert) schnell zugegeben. Es bildete sich ein ebenfalls farbloses und klares Sol mit ähnlicher Viskosität wie Wasser. Dieses so gewonnene Sol eignete sich für die Weiterverarbeitung sowohl durch Sprühtrocknung als auch durch Gefriertrocknung.

### Beispiel C

Zur Herstellung von dotiertem BST wurden die Dotierungen (Fe, Ta) entweder als hydrolyseempfindliche Alkoholate oder als wasserlösliche Nitrate zugegeben. Das wasserempfindliche Alkoholat der Ta-Dotierung wurde zusammen mit dem Ti-Isopropylat am Anfang der Synthese über volumetrische Dosierung einer Stammlösung von Ta-Ethoxid in Isopropanol (9,015 mg Ta-Ethoxid pro ml Lösung) zugegeben. Die wasserlöslichen Nitrate wurden vor der Verdünnung durch Wasser als wäßrige Lösung zugegeben. Als Dotierungen wurden Fe3⁺ als Akzeptor, Ta5⁺ als Donator, sowie Fe3⁺ zusammen mit F⁻ als Akzeptor-Donator Mischdotierung gewählt. Eisen und Tantal wurden in zwei verschiedenen Konzentrationen als Nitrate eingebracht, F- wurde als Trifluoressigsäure (TFA) eingebracht. Die Wasserzugabe war nötig, um eine Weiterverarbeitung durch Gefriertrocknung zu ermöglichen.

### Beispiel D

Das verdünnte, wäßrige Sol wurde unter Stickstoff bei einer Gastemperatur von ca. 125°C und einem Gasfluß von etwa 38 m3/h sprühgetrocknet. Die resultierenden Fein- und Grobfraktionen aus dem Turm sowie dem Zyklon wurden nach getrennten Untersuchungen der thermischen Zersetzung vereinigt. Als Sprühtrockner wurde ein Laborsprühtrockner der Firma Niro AS Kopenhagen, Dänemark, mit einem gasbetriebenem Zerstäuberrad verwendet.

### Beispiel E

Hierbei wurde das wäßrige Sol mittels eines gasbetriebenen Zerstäubers (N₂-betriebene Zweistoffdüse) in flüssigen Stickstoff gesprüht. Es bildete sich ein Sprühgefriergranulat aus schnell gefrorenen Soltröpfchen. Dieses gefrorene Granulat wurde anschließend auf Edelstahltellern, die mittels beheizbarer Stellflächen temperierbar sind, in einem Gefriertrockner (Christ Alpha 1-2) unter Vakuum bei einem Druck von minimal 0,1-0,2 Pa (110-3 mbar) während ca. 100 h gefriergetrocknet. Die Vakuumkammer des Gefriertrockners aus Acrylglas war zusätzlich durch Polyethylen-Luftkammer- und Alufolie thermisch isoliert worden, um den Wärmeeintrag in die Trocknungsmasse aus der Umgebung zu minimieren.
Während der ersten 96 h des Gefriertrocknungsvorgangs wurde die Temperatur der Stellflächen, gänzlich ohne direkte Wärmeeintragung von Außen durch Heizen, sich selbst überlassen. Die Temperaturentwicklung des Granulates in einem der Teller wurde mittels eines Pt100 Widerstandstemperaturfühlers überwacht. Nach 96 h hatte das Granulat eine Temperatur von etwa 0-10°C. Es wurde dann unter Vakuum von dieser Temperatur aus in 3 Stufen von 2x ΔT =20°C und 1x ΔT = 60°C bis auf 100°C manuell hoch geregelt, um auch Kapillarwasser zu entfernen. Dabei wurden die einzelnen Temperaturstufen (20°C, 40°C, 100°C) für je 1 Stunde konstant gehalten. Nach dem einstündigen Ausheizen bei 100°C wurde die Trocknungskammer mit N₂ geflutet, unter N₂-Fluß ca. 5-10 Minuten abkühlen lassen und das resultierende weiße Precursorpulver noch heiß in PE-Flaschen abgefüllt.

### Beispiel F

Es wurden die entsprechenden Precursoren bei 700°C 1 h unter Preßluftfluß (15 l/h) in großen Al₂O₃ Glühkästen in Chargen zu je ca. 4 g Precursor kalziniert. Der verwendete Ofen war ein Kammerofen (Carbolite RHF1400) mit SiC-Heizelementen. Die Aufheizrate betrug 5 K/Min. und die Abkühlrate ebenfalls, wie erläutert, maximal 10 K/Min. Zur Variation der Korngrößen wurden je etwa 10 g eines Ansatzes erneut bei 900°C (Ansatz 2) oder 1100°C (Ansatz 3) unter den gerade genannten Bedingungen kalziniert.

### Beispiel G1

Im Einzelnen wurden die Pasten wie folgt hergestellt:
Keramische Pulver aus dem Sprühtrocknungsprozeß konnten nicht kontaminisationsarm mittels Ultraschall deagglomeriert werden. Deshalb wurden sie erst nach 6 h Mahlen im Attritor weiter zu Siebdruckpasten verarbeitet. Dazu wurde das keramische, agglomerierte Pulver mit Ethanol als Mahlmedium in einem Attritor (Netzsch) mit Mahlkugeln (Durchmesser ca. 1 mm) und auf einer Edelstahlwelle montierten Rührer aus Mg-stabilisiertem ZrO₂ sowie einem Al₂O₃-Mahlbecher während 7 h unter Wasserkühlung des Mahlbechers bei 600 U/Min. gemahlen. Die resultierende Suspension samt Mahlkugeln wurde am Rotationsverdampfer eingeengt. Das entstandene Granulat wurde anschließend bei 120°C vollständig getrocknet und über ein Edelstahlsieb mit 71 µm Maschenweite gesiebt um die Mahlkugeln abzutrennen. Gemahlene, wie auch ungemahlene keramische Pulver wurden bei Raumtemperatur in eine Lösung des Hypermer KD1 in Terpineol mittels eines Dissolverrührers eingerührt. Nach ca. 1 h Rühren wurde zu dieser Masse die gewünschte Menge an Ethylcellulose, gelöst in Terpineol zugegeben und noch einmal 0,5 - 1 h gerührt. Die so entstandene pastöse Masse wurde durch mehrmaliges Scheren auf einem Dreiwalzwerk (Walzenstuhl) mit Keramikwalzen aus Al₂O₃ (Exakt 50, Koenen) weiter homogenisiert. Hieraus resultierten druckfertige Siebdruckpasten.

### Beispiel G2

Die aus dem Gefriertrocknungsprozeß stammenden Keramikpulver wurden während der Pastenherstellung mittels Ultraschall deagglomeriert. Dazu wurden 3-4 g keramisches Pulver in 50 ml Aceton (SupraSolv, Merck) suspendiert und 240 Minuten mit maximaler Leistung des Ultraschalldesintegrators (Bandelin UW2200 mit diamantbeschichteter Sonotrode DH13G) beschallt. Dies wurde in einem 80 ml Rosettenglas aus Borosilikatglas unter Wasserkühlung durchgeführt. Gegen Ende des Beschallungsvorgangs wurden die gewünschten Mengen an Hypermer KD1 (gelöst in Aceton), Terpineol und Ethylcellulose (gelöst in Aceton) in dieser Reihenfolge zu der Suspension gegeben. Diese wurde anschließend am Rotationsverdampfer bei 45°C und Wasserstrahlvakuum vom Aceton befreit und bis zu einer pastösen Konsistenz eingeengt.
Die resultierende Rohpaste wurde daraufhin mehrfach über das Dreifachwalzwerk gegeben bis kein Acetongeruch mehr wahrnehmbar war.

### Beispiel H

Beispiel für eine erfindungsgemäß verwendbare Pastenzusammensetzung.

| **Bestandteil** | **Funktion** | **Volumenanteil** |
|---|---|---|
| Terpineol | Lösungsmittel | 77,9 Vol.-% |
| Hypermer KD1 | Detergenz | 0,9 Vol.-% |
| Ethylcellulose | Rheologieadditiv | 4,4 Vol.-% |
| BST-Pulver | Feststoff | 17,1 Vol.-% |

Diese Pastenzusammensetzung zeigt optimierte Eigenschaften hinsichtlich Druckverhalten und der Porosität der daraus resultierenden Dickschichten.

### Beispiel J

Die zum Drucken der Dickschichten verwendete Siebdruckanlage war eine halbautomatische Siebdruckmaschine (EKRA, Typ M2).
Die hierbei verwendeten Druckparameter sind:

| Druckparameter | Wert |
|---|---|
| Absprung | 0,5 mm |
| Rakelgeschwindigkeit | 30 mm/s |
| Rakeldruck | 2 bar |
| Rakelbreite ca. | 10 cm |
| Rakelhärte | 60 Shore |

Zum Drucken wurden Siebe mit Edelstahlgewebe und einem Bespannungswinkel von 22,5° verwendet. Die verwendeten Gewebefeinheiten waren 325, 250 und 200 mesh/inch mit einem Drahtdurchmesser von 24, 36 bzw. 40 µm und einer Maschenweite von 53, 63 bzw. 90 µm.
Die Strukturierung der Siebe erfolgte durch einen UV-aushärtbaren Fotopolymerfilm (Murakami MS) mit 30 µm Dicke, der durch eine Photopolymeremulsion auf die Siebe laminiert wurde. Mittels Belichtung von Diapositiven in einem Siebdruckkopiergerät (Koenen Variocorp S) und wäßriger Auswaschung der nichtbelichteten Bereiche wurden die gewünschten Strukturen erzeugt. Gedruckt wurde jeweils nach Flutung des Siebes mit der entsprechenden Paste durch einen vorangegangenen "Blinddruck", der verworfen wurde.

### Beispiel K1

Zur Messung der Niederfrequenzeigenschaften (NF-Eigenschaften) wurden Kondensatorstrukturen mittels Siebdruck auf polykristalline Al₂O₃-Substrate (50,8 x 50,8 mm, Dicke =635 µm ±50 µm; Rubalit710, CeramTec AG, Marktredwitz) mit einer Dichte ≥99,6% der theoretischen Dichte aufgebracht. Diese Al₂O₃-Substrate waren vor dem Bedrucken auf der Rückseite mittels Laserstrukturierung in 18 gleichgroße, von Sollbruchvertiefungen begrenzte, rechteckige Felder mit einer Größe von ca. 8,3mmx 16,7mm aufgeteilt worden. Die lasererzeugten Sollbruchvertiefungen dienten dazu, die hergestellten Kondensatorstrukturen zu vereinzeln, um sie handhabbar für die dielektrischen Messungen zu machen. Vor dem Aufbringen der dielektrischen Dickschicht auf die einzelnen Substratfelder jedoch wurden rechteckige Pt-Dickschichten (ca. 5mmx 8 mm) als untere Elektroden mittels Siebdruck auf das Substrat aufgedruckt und gesintert. Dies geschah zweimal hintereinander. Die Sintertemperatur betrug 1300°C während 10 Minuten Haltezeit bei einer Aufheizrate von 5 K/Min. unter Luft.
Auf diese so erzeugten Pt-Elektroden wurde die BST-Schicht als ein um 90° gedrehter Streifen (5mmx 8 mm) durch ein 250 mesh-Sieb aufgedruckt. Dabei wurden direkt nach dem Druckvorgang die Schichten zur Nivellierung bei Raumtemperatur ca. 20 s in eine gesättigte Acetonatmosphäre eingebracht und anschließend mindestens 15 Minuten zur weiteren Nivellierung abgedeckt ruhen lassen. Anschließend wurden sie abgedeckt in einer Petrischale mindestens 8 h bei 60°C in einem Umlufttrockenschrank (Heraeus UT6) getrocknet. Nach dem Trocknen wurde der Druck- und Trocknungsvorgang noch einmal wiederholt um eine ausreichende Schichtdicke für eine hohe Durchschlagsfestigkeit der Dickschichtkondensatoren zu erreichen. Die getrockneten Dickschichten wurden anschließend kaltisostatisch bei 400 MPa verdichtet. Dazu wurde für den Preßvorgang Haushaltsalufolie als nichthaftende Trennschicht zwischen die zu verdichtende, ungesinterte Dickschicht und die Einschweißfolie aus Polyethylen gelegt.

### Beispiel K2

Zur Bestimmung der Hochfrequenzeigenschaften (HF-Eigenschaften) der BST-Dickschichten wurden einfach gedruckte und über das gesamte Substrat durchgängige BST-Schichten hergestellt. Sie wurden auf gleiche Al₂O₃-Substrate gedruckt wie auch die oben genannten Schichten der Kondensatorstrukturen für die NF-Messungen, jedoch ohne gelaserte Sollbruchvertiefungen. Sie wurden zur Variation der Schichtdicke einmal durch 325, 250 sowie 200-mesh/inch Siebe gedruckt. Nach dem Drucken wurden sie wie die gedruckten Kondensatorstrukturen ebenfalls für ca. 20 s in eine gesättigte Acetonatmosphäre gebracht, dann mindesten 15 Minuten zum nivellieren stehen lassen und anschließend in einer geschlossenen Petrischale mindestens 8 h in einem Umluftschrank bei 60°C getrocknet. Die getrockneten Schichten wurden dann ebenfalls kaltisostatisch bei 400 MPa nachverdichtet, mit Alufolie als Antihaftschicht zwischen BST-Schicht und PE-Einschweißfolie.

### Beispiel L

Sowohl die auf gelaserte Al₂O₃-Substrate mit Pt-Elektroden gedruckten BST-Dickschichten, als auch die flächig auf nicht strukturierte Al₂O₃-Substrate gedruckten BST-Dickschichten wurden standardmäßig in einem Kammerofen (Linn VMK1400) bei 1200°C 1 h unter Luft gesintert. Die Heiz- und Abkühlrate betrug 5 K/Min.
Eine Ausnahme bildeten hierbei die fluoridierten Schichten. Sie wurden mit einem identischen Heizprofil gesintert, jedoch in einem geschlossenen Röhrenofen (Heraeus CTF1600), der mit über P₂O₅ getrockneter synthetischer Luft gespült wurde (ca. 100 ml/min). Hierdurch sollten F⁻-Verluste durch Bildung von HF mit atmosphärischem Wasser vermieden werden.
Zusätzlich zu dem Sinterverfahren im Kammer- bzw. Röhrenofen wurden Dickschichten mittels Mikrowellen gesintert. Dazu wurde ein Ofen mit einer 30 GHz Gyrotron Mikrowellenquelle des IHM (Institut für Hochleistungsimpuls und Mikrowellentechnik) am Forschungszentrum Karlsruhe eingesetzt. Hierbei geschah die Regelung der eingestrahlten Mikrowellenleistung (max. 10 kW) über einen Steuerungsrechner, an den zur Temperaturüberwachung Thermoelemente angeschlossen waren, die sich im direkten Kontakt mit dem Substrat der zu sinternden Dickschicht befanden. Die Leistungssteuerung wurde im "continous wave"-Mode durchgeführt. Die Proben waren dabei waagerecht zwischen zwei porösen ZrO₂-Platten plaziert, die wiederum in Platten aus Mullitfasern eingebettet waren. Die ZrO₂-Platten dienten als indirekte Heizer (Suszeptoren) um Wärmeverluste und Temperaturgradienten der Probe durch Strahlung zu minimieren. Die Einfassung aus Mullitfaserplatten diente der thermischen Isolierung. Die Aufheizrate betrug 30 K/Min, die Sintertemperatur 1200°C, die Haltezeit 20 Minuten und die Abkühlrate entsprach 5 K/Min. bis 500°C und der natürlichen Abkühlrate des Probenisolationssystems ab 500°C. Die Abkühlrate betrug unter 500°C maximal 20 K/Min. Die Atmosphäre war Umgebungsluft.

### Beispiel M

Auf die gesinterten Pt-BST-Schichten wurde anschließend als obere Elektrode zusätzlich eine Golddickschicht (ca. 4mmx 7 mm) aufgebracht. Dazu wurde ebenfalls per Siebdruck eine kommerzielle Gold-Paste mittig auf die BST-Schicht gedruckt. Diese wurde nach dem Trocknen in einem Kammerofen (Linn VMK1400) unter Umgebungsluft 10 Min. bei 830°C mit einer Heiz- und Abkühlrate von 5 K/Min gesintert.
Die fluoridierten Schichten wurden mit einem identischen Heizprofil gesintert, jedoch, wie oben beschrieben, in einem geschlossenen Röhrenofen unter getrockneter synthetischer Luft.

### Beispiel N

Es wurde zunächst eine 20nm dicke Schicht aus Cr und eine 50nm dicke Schicht aus Gold als Startmetallisierung thermisch aufgedampft. Darauf wurde ein Positiv-Photolack (AZ 4562; MicroChemicals GmbH, Ulm) durch Spincoating aufgebracht, mittels UV-Licht über eine Fotomaske (Negativ) belichtet und anschließend in einem Entwicklerbad (AZ 400k; MicroChemicals GmbH, Ulm) ausgewaschen, so daß nur die zu beschichtenden Bereiche der Starterschicht zugänglich wurden. Diese durch die Entwicklung freigelegten Bereiche der Startmetallisierung wurden nun in einem Goldsalzbad (Puramed 40x) galvanisch auf ca. 2,5 - 3 µm Schichtdicke verstärkt. An die galvanische Abscheidung anschließend wurde der Photolack mittels Aceton aus der Struktur herausgelöst. Die im Vergleich zur galvanisch abgeschiedenen Goldschicht dünne Start-metallisierung aus Chrom und Gold wurde nun mittels einer Goldätzlösung (wäßrige Iod/Kaliumiodid-Lösung) sowie 10-15 sekündiges Ätzen mit einer Chromätzlösung (salpetersaure Ammonium-Cer(IV)-Nitratlösung) entfernt. Anschließend wurde die Struktur mit destilliertem Wasser gewaschen.

### Beispiel O (Anwendungsbeispiel)

Zur Realisierung steuerbarer Kondensatoren für die Hochfrequenztechnik wurden auf BST-Dickschichten Interdigitalkondensatoren strukturiert.
Durch Anlegen einer Steuerspannung zwischen den Fingern des Interdigitalkondensators bildete sich in der BST-Schicht ein elektrisches Steuerfeld aus. Dieses Steuerfeld verringerte die Permittivität des Dielektrikums. Die Verringerung der Permittivität reduzierte die Kapazität des so steuerbaren Kondensators.

## Patentansprüche

1. Keramisches Dielektrikum auf Basis des Systems Ba₁₋ₓSrₓTi_{1-y}Me_{y}O_{3-z}F_{z} mit
x = 0,0001 bis 1, bevorzugt 0,2 bis 0,6 und
y = 0,0001 bis 0,2, bevorzugt 0,001 bis 0,05 und
z = 0,00001 bis 3, bevorzugt 0,001 bis 0,2, **dadurch gekennzeichnet, daß** als Dotierungsmetall Me eines oder mehrere der Metalle ausgewählt aus der Gruppe bestehend aus Fe, Co, Mn, Ni, Cu, Mg, Cr, Zn, Cd, Ag, Y, Sc, Al, Ga, In, As, Sb, Pt, Au eingesetzt werden.

2. Keramisches Dielektrikum nach Anspruch 2, **dadurch gekennzeichnet, daß** Fe, Co, Mn, Ni, Cu, Mg und/oder Cr, insbesondere Fe als Dotierungsmetall Me eingesetzt wird.

3. Keramisches Dielektrikum nach einem der Ansprüche 1 oder 2, **dadurch gekennzeichnet, dass** die Titan-Ionen durch maximal 25 Atom-% Zr, bevorzugt maximal 10 Atom-% Zr, besonders bevorzugt maximal 5 Atom-% Zr, ersetzt sind, wobei sich die Atom-% auf das durch Zr substituierte Element Ti beziehen.

4. Keramisches Dielektrikum nach Anspruch 3, **dadurch gekennzeichnet, dass** die Titan-Ionen durch 0,001 bis 25 Atom-% Zr, bevorzugt 0,001 bis 12 Atom-% Zr, besonders bevorzugt 0,001 bis 7 Atom-% Zr, insbesondere bevorzugt 0,001 bis 2,5 Atom-% Zr ersetzt sind, wobei sich die Atom-% auf das durch Zr substituierte Element Ti beziehen.

5. Keramisches Dielektrikum nach einem der Ansprüche 1 oder 2, **dadurch gekennzeichnet, daß** es der Formel Ba_{0.6}Sr_{0.4}Ti_{0.99}Fe_{0.01}O_{3-z}F_{z} entspricht, wobei z = 0,001 bis 0,2 ist.

6. Verwendung eines keramischen Dielektrikums nach einem der Ansprüche 1 bis 5, für Dünn- und/oder Dickschichtsysteme, bevorzugt für den Einsatz als elektronisch steuerbare funktionelle Schichten im Frequenzbereich von 10 kHz bis 500 GHz oder darüber, bevorzugt 100 MHz bis 100 GHz, insbesondere bevorzugt 100 MHz und 50 GHz bzw. zwischen 100 MHz und 40 Ghz, oder für steuerbare HF/Mikrowellenanwendungen.

7. Verwendung nach Anspruch 6, **dadurch gekennzeichnet, daß** es siebgedruckte Dickschichten sind, wobei die hergestellten Dickschichten bevorzugt feinteilig mit Korngrößen im Bereich von 20 bis 1000nm sind.

8. Verfahren zur Herstellung von siebgedruckten Dickschichten umfassenden Mehrschichtaufbauten durch
1) Herstellung eines Sols,
2) Herstellung eines Precursors über
a1) die inverse Micellenroute oder
a2) die Sol-Gel-Route,
b) Trocknung des Sols,
3) Herstellung eines keramischen Pulvers mittels Kalzination des Precursors,
3).1 gegebenenfalls Ultraschalldeagglomeration oder Mahlen des keramischen Pulvers,
4) Herstellung der Siebdruckpaste durch Vermischen der Bestandteile,
5) Aufbringen der Siebdruckpaste auf ein Substrat mittels Siebdruck,
6) Sintern der Dickschichten,
wobei die siebgedruckten Dickschichten mindestens ein keramisches Dielektrikum gemäß einem der Ansprüche 1 bis 5 umfassen.

9. Verfahren zur Herstellung von CSD Dünnschichten umfassenden Mehrschichtaufbauten durch
1 a) Herstellung eines Sols
5a) Aufbringen des Sols auf ein Substrat mittels
a) Dip Coating,
b) Spin Coating oder
c) Inkjet-Printing und
6a) Trocknen, Kalzinieren und/oder Sintern der aufgetragenen Schichten.
wobei die Dünnschichten mindestens ein keramisches Dielektrikum gemäß einem der Ansprüche 1 bis 5 umfassen.

10. Verfahren nach Anspruch 8 oder 9, **dadurch gekennzeichnet, daß** die Dünn- oder Dickschichten Dünn- oder Dickschichten gemäß einem der Ansprüche 6 oder 7 sind und/oder das mindestens eine keramische Dielektrikum ein keramisches Dielektrikum gemäß einem der Ansprüche 1 bis 5 ist.

11. Verfahren nach einem der Ansprüche 8 bis 10, **dadurch gekennzeichnet, daß** das Sintern durch Hochtemperatur-Sintern oder durch Mikrowellensintem oder eine Kombination der Verfahren erfolgt.

12. Verfahren nach einem der Ansprüche 8 bis 11, **dadurch gekennzeichnet, daß** das in Schritt 5) zu beschichtende Substrat mit einer Metallschicht, bevorzugt aus Aluminium, Nickel, Palladium, Kupfer, Gold, Silber und/oder Platin, insbesondere Platin, überzogen ist.

13. Verfahren nach einem der Ansprüche 8 bis 12 **dadurch gekennzeichnet, daß** die Dünn- oder Dickschichten in einem weiteren Schritt metallisiert, bevorzugt mit Chrom und/oder Gold, werden, wobei das Metallisieren bevorzugt durch
a) Siebdruck,
b) Aufdampfen,
c) Sputtern,
d) Ionenätzen oder
e) Tintenstrahldruck (Ink-Jet Printing)
erfolgt.

14. Verwendung des keramischen Dielektrikums gemäß einem der Ansprüche 1 bis 5, und/oder der siebgedruckten Dünn- und/oder Dickschichten gemäß einem der Ansprüche 6 oder 7 in der Telekommunikationsbranche, im Bereich der Hochfrequenztechnik und/oder im Bereich der Telekommunikation,
im Mobilfunk, Satellitenfunk, Punkt-zu-Multipunkt Funksystemen, abstimmbaren RF-Filter und Duplexer, adaptive Anpaßnetzwerke oder Phasenschieber, RF-Sensorsysteme, wie z.B. RFID,
in kompakten elektronisch steuerbaren und/oder nichtsteuerbaren HF/Mikrowellenmodulen, bevorzugt in Bluetooth-, Mobilfunk- und RFID-Anwendungen, in elektronisch steuerbaren HF-Leitungen und elektronisch abstimmbaren Hochfrequenzfiltern, sowie in Antennen.

## Claims

1. A ceramic dielectric based on the system Ba₁₋ₓSrₓTi_{1-y}Me_{y}O_{3-z}F_{z} where
x = 0.0001 to 1, preferably 0.2 to 0.6, and
y = 0.0001 to 0.2, preferably 0.001 to 0.05, and
z = 0.00001 to 3, preferably 0.001 to 0.2, **characterized in that** one or more of the metals selected from the group consisting of Fe, Co, Mn, Ni, Cu, Mg, Cr, Zn, Cd, Ag, Y, Sc, Al, Ga, In, As, Sb, Pt and Au are used as doping metal Me.

2. The ceramic dielectric as claimed in claim 2, **characterized in that** Fe, Co, Mn, Ni, Cu, Mg and/or Cr, in particular Fe, is used as doping metal Me.

3. The ceramic dielectric as claimed in either of claims 1 and 2, **characterized in that** the Ti ions are replaced by not more than 25 atom% Zr, preferably not more than 10% atom % Zr, particularly preferably not more than 5 atom% Zr, whereby the data in atom% are based on the element Ti substituted by Zr.

4. The ceramic dielectric as claimed in claim 3, **characterized in that** the Ti ions are replaced by from 0.001 to 25 atom% Zr, preferably from 0.001 to 12 atom% Zr, in particular from 0.001 to 7 atom % of Zr, most preferably to from 0.001 to 2.5 atom % Zr whereby the atom % are based on the element Ti substituted by Zr.

5. The ceramic dielectric as claimed in either of claims 1 and 2, **characterized in that** it corresponds to the formula Ba_{0.6}Sr_{0.4}Ti_{0.99}Fe_{0.01}O_{3-z}F_{z}, where z is from 0.001 to 0.2.

6. The use of a ceramic dielectric as claimed in any of claims 1 to 5 for thin and/or thick layer systems, preferably for the use as electronically controllable functional layers in the frequency range from 10 kHz to 500 GHz or above, preferably from 100 MHz to 100 GHz, particularly preferably 100 MHz and 50 GHz or from 100 MHz to 40 GHz or for controllable HF/microwave applications.

7. The use as claimed in claim 6, **characterized in that** said layers are screen-printed thick layers and where the thick layers produced are preferably finely divided with particle sizes in the range from 20 to 1000 nm.

8. A method for producing screen-printed thick layers, comprising multilayer structures by
1) production of a sol,
2) production of a precursor via
a1) the inverse micelle route or
a2) the sol-gel route,
b) drying of the sol,
3) production of a ceramic powder by means of calcination of the precursor,
3). 1 if appropriate, ultrasonic deagglomeration or milling of the ceramic powder,
4) production of the screen print paste by mixing of the constituents,
5) application of the screen print paste to a substrate by means of screen printing,
6) sintering of the thick layers,
the screen-printed thick layers comprising at least one ceramic dielectric as claimed in any of claims 1 to 5.

9. A method for producing CSD thin layers comprising multilayer structures by
1a) production of a sol,
5a) application of the sol to a substrate by means of
a) dipcoating,
b) spincoating or
c) inkjet printing and
6a) drying, calcination and/or sintering of the applied layers,
the thin layers comprising at least one ceramic dielectric as claimed in any of claims 1 to 5.

10. The method as claimed in claim 8 or 9, **characterized in that** the thin or thick layers are thin or thick layers as claimed in one of claims 6 or 7 and/or the at least one ceramic dielectric is a ceramic dielectric as claimed in any of claims 1 to 5.

11. The method as claimed in any of claims 8 to 10, **characterized in that** the sintering is effected by high-temperature sintering or by microwave sintering or a combination of the methods.

12. The method as claimed in any of claims 8 to 11, **characterized in that** the substrate to be coated in step 5) is covered with a metal layer, preferably comprising aluminum, nickel, palladium, copper, gold, silver and/or platinum, in particular platinum.

13. The method as claimed in any of claims 8 to 12, **characterized in that** the thin or thick layers are metalized in a further step, preferably with chromium and/or gold and **in that** the metallization is effected by
a) screen printing,
b) vapor deposition,
c) sputtering,
d) ion etching or
e) inkjet printing.

14. The use of the ceramic dielectric as claimed in any of claims 1 to 5 and/or of the screen-printed thin and/or thick layers as claimed in one of claims 6 or 7 in the telecommunications sector, in the area of high frequency technology and/or in the area of telecommunications,
in mobile radio, satellite radio, point-to-multipoint radio systems, tunable RF filters and duplexers, adaptive matching networks or phase shifters, RF sensor systems, such as, for example, RFID,
in compact electronically controllable and/or non-controllable HF/microwave modules, preferably in Bluetooth, mobile radio and RFID applications, in electronically controlled HF cables and electronically tunable high frequency filters, and in antennas.

## Revendications

1. Diélectrique céramique à base du système Ba₁₋ₓSrₓTi_{1-y}Me_{y}O_{3-z}F_{z} où
x = 0,0001 à 1, de préférence 0,2 à 0,6 et
y = 0,0001 à 0,2, de préférence 0,001 à 0,05 et
z = 0,00001 à 3, de préférence 0,001 à 0,2, **caractérisé en ce qu'**on utilise comme métal de dopage Me un ou plusieurs des métaux choisis dans le groupe constitué par Fe, Co, Mn, Ni, Cu, Mg, Cr, Zn, Cd, Ag, Y, Sc, Al, Ga, In, As, Sb, Pt, Au.

2. Diélectrique céramique selon la revendication 2, **caractérisé en ce qu'**on utilise comme métal de dopage Me Fe, Co, Mn, Ni, Cu, Mg et/ou Cr, en particulier Fe.

3. Diélectrique céramique selon l'une quelconque des revendications 1 et 2, **caractérisé en ce que** les ions titane sont remplacés par au maximum 25 % en atomes de Zr, de préférence au maximum 10 % en atomes de Zr, de façon particulièrement préférée au maximum 5 % en atomes de Zr, les % en atomes se rapportant à l'élément Ti remplacé par Zr.

4. Diélectrique céramique selon la revendication 3, **caractérisé en ce que** les ions titane sont remplacés par 0,001 à 25 % en atomes de Zr, de préférence 0,001 à 12 % en atomes de Zr, de façon particulièrement préférée 0,001 à 7 % en atomes de Zr, de façon plus particulièrement préférée 0,001 à 2,5 % en atomes de Zr, les % en atomes se rapportant à l'élément Ti remplacé par Zr.

5. Diélectrique céramique selon l'une quelconque des revendications 1 et 2, **caractérisé en ce qu'**il correspond à la formule Ba_{0,6}Sr_{0,4}Ti_{0,99}Fe_{0,01}O_{3-z}F_{z}, z valant de 0,001 à 0,2.

6. Utilisation d'un diélectrique céramique selon l'une quelconque des revendications 1 à 5, pour des systèmes en couche épaisse et/ou en couche mince, de préférence pour l'emploi en tant que couches fonctionnelles à commande électronique dans la gamme de fréquences de 10 kHz à 500 GHz ou plus, de préférence de 100 MHz à 100 GHz, de façon particulièrement préférée entre 100 MHz et 50 GHz ou entre 100 MHz et 40 GHz, ou pour des applications de HF/micro-ondes réglables.

7. Utilisation selon la revendication 6, **caractérisée en ce que** ce sont des couches épaisses sérigraphiées, les couches épaisses produites étant de préférence à grains fins avec des tailles de grain dans la plage de 20 à 1 000 nm.

8. Procédé pour la production de systèmes multicouches comprenant des couches épaisses sérigraphiées, par
1) préparation d'un sol,
2) préparation d'un précurseur par
a1) la voie micellaire inverse ou
a2) la voie sol-gel,
b) séchage du sol,
3) préparation d'une poudre céramique par calcination du précurseur,
3). 1 éventuellement désagglomération ultrasonique ou broyage de la poudre céramique,
4) préparation de la pâte sérigraphique par mélange des composants,
5) application de la pâte sérigraphique sur un support par sérigraphie,
6) frittage des couches épaisses,
les couches épaisses sérigraphiées comprenant au moins un diélectrique céramique selon l'une quelconque des revendications 1 à 5.

9. Procédé pour la production de systèmes multicouches comprenant des couches minces CSD, par
1a) préparation d'un sol,
5a) application du sol sur un substrat par
a) enduction au trempé,
b) enduction par centrifugation ou
c) impression par jet d'encre et
6a) séchage, calcination et/ou frittage des couches appliquées,
les couches minces comprenant au moins un diélectrique céramique selon l'une quelconque des revendications 1 à 5.

10. Procédé selon la revendication 8 ou 9, **caractérisé en ce que** les couches épaisses ou minces sont des couches épaisses ou minces selon l'une quelconque des revendications 6 et 7 et/ou ledit au moins un diélectrique céramique est un diélectrique céramique selon l'une quelconque des revendications 1 à 5.

11. Procédé selon l'une quelconque des revendications 8 à 10, **caractérisé en ce que** le frittage s'effectue par frittage à haute température ou par frittage par micro-ondes ou par une combinaison des procédés.

12. Procédé selon l'une quelconque des revendications 8 à 11, **caractérisé en ce que** le substrat à revêtir dans l'étape 5) est recouvert d'une couche métallique, de préférence en aluminium, nickel, palladium, cuivre, or, argent et/ou platine, en particulier platine.

13. Procédé selon l'une quelconque des revendications 8 à 12, **caractérisé en ce que** les couches épaisses ou minces sont dans une étape ultérieure métallisées, de préférence avec du chrome et/ou de l'or, la métallisation s'effectuant de préférence par
a) sérigraphie,
b) dépôt par vaporisation,
c) pulvérisation cathodique,
d) gravure ionique ou
e) impression par jet d'encre (ink-jet printing).

14. Utilisation du diélectrique céramique selon l'une quelconque des revendications 1 à 5, et/ou des couches épaisses et/ou couches minces sérigraphiées selon l'une quelconque des revendications 6 et 7 dans le secteur des télécommunications, dans le domaine de la technique des hautes fréquences et/ou dans le domaine de la télécommunication,
dans la téléphonie mobile, la radionavigation par satellite, les systèmes radio point à multipoint, les filtres RF et duplexeurs accordables, les réseaux adaptatifs ou les oscillateurs à déphasage, les systèmes de capteurs RF, comme par exemple RFID,
dans des modules à micro-ondes/HF compacts à commande électronique et/ou non à commande électronique, de préférence dans des applications Bluetooth, de téléphonie mobile et RFID, dans des lignes HF à commande électronique et des filtres haute fréquence accordables électroniquement, ainsi que dans des antennes.
